# EUROPEAN PATENT SPECIFICATION

(11) **EP 1 793 763 B1**
(45) Date of publication and mention of the grant of the patent: **05.06.2013**
(21) Application number: 05802825.9
(22) Date of filing: 23.09.2005
(51) Int. Cl.: A61C 17/22, A61C 17/34

(54) **ELECTRIC TOOTHBRUSH COMPRISING ELASTOMER**
ELEKTRISCHE ZAHNBÜRSTE MIT EINEM ELASTOMER
BROSSE A DENTS ELECTRIQUE COMPRENANT UN ELASTOMERE

(30) Priority: 27.09.2004 US 613627 P
(43) Date of publication of application: 13.06.2007
(73) Proprietor: The Procter & Gamble Company, Cincinnati, OH 45202 (US)
(72) Inventor: CHAN, John, Geoffrey, Maineville, Ohio 45039 (US)
(74) Representative: Töpert, Verena Clarita
(86) International application number: PCT/US2005/034886
(87) International publication number: WO 2006/037065

(56) References cited:
- US-A- 1 993 763
- US-A- 5 584 690
- US-A1- 2004 060 137

## Description

### FIELD OF THE INVENTION

The present invention relates to the field of electric toothbrushes having one or more elastomeric elements. US 1,993,763 provides a dentist's brush having a conical cup-form resilient body which surrounds a conical chamber in which an inner brush of bristles is placed. US 2004/0060137 A1 discloses a powered toothbrush having a brush section with a first and a second bristle carrier which are connected to each other and wherein the first bristle carrier is driven to rotate in an oscillating manner and the second bristle carrier oscillates in accordance with the first bristle carrier in a sectional manner. Both bristle carriers can carry any type of elastomeric or non-elastomeric bristles.

### BRIEF SUMMARY OF THE INVENTION

An electric toothbrush may comprise a handle having a motor, a head having a longitudinal axis, and a neck. The head may have a first bristle plate, a second bristle plate, and/or a third bristle plate. The first bristle plate may oscillate or rotate about an axis of rotation. The second bristle plate may reciprocate along the longitudinal axis of the head, transverse to the longitudinal axis of the head, or up and down from the head. The first bristle plate may have a plurality of elastomeric elements, including a prophy cup.

The present invention relates to an electric toothbrush comprising a handle having a motor disposed therein, a head having a longitudinal axis, a neck disposed between the handle and the head, and a first bristle plate which oscillates or rotates about an axis of rotation. The first bristle plate comprises a prophy cup, wherein said prophy cup is surrounded by at least three groups of tufts, wherein at least one group of tufts comprises non-elastomeric bristles and wherein at least a portion of said non-elastomeric bristles extend at 90 degrees or at an acute angle relative to a top surface of the first bristle plate and wherein at least one group of tufts is elongated.

### BRIEF DESCRIPTION OF THE DRAWINGS

The present invention may take form in various components and arrangements of components, and in various techniques, methods, or procedures and arrangements of steps. The referenced drawings are only for purposes of illustrating preferred embodiments, they are not necessarily to scale, and are not to be construed as limiting the present invention.
Fig. 1 is a planar, partial sectional, top view of an electric toothbrush.
Fig. 2 is a planar top view of an alternate embodiment of a top portion of the electric toothbrush of Fig. 1, wherein the oscillating bristle plate comprises elastomeric elements.
Fig. 3 is a cross-sectional side view of the oscillating bristle plate of Fig. 2.
Fig. 4 is a cross-sectional side view of an alternate embodiment of the oscillating bristle plate of Fig. 3, wherein the outer row comprises elastomeric elements, and wherein the elastomeric elements in the outer row are taller than the elastomeric elements in the inner row.

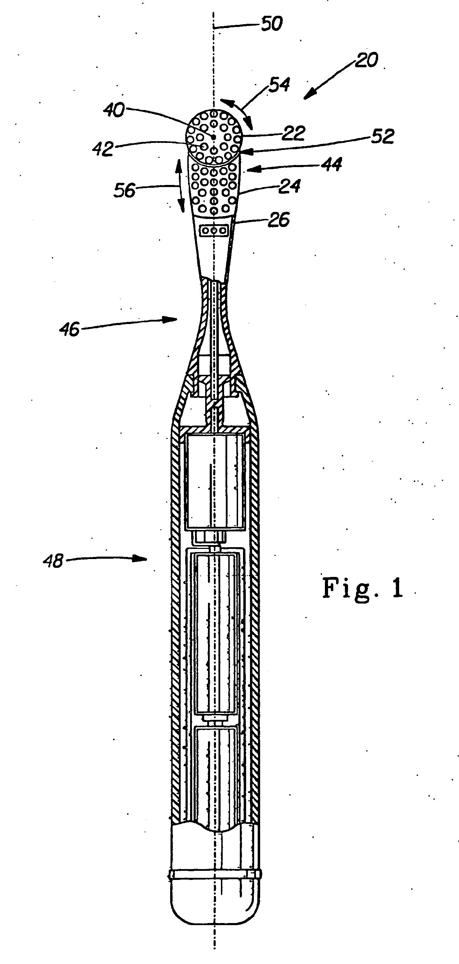

Figs. 1-4 do not represent the invention as defined in claim 1 since the prophy cup is not surrounded by at least three groups tufts.

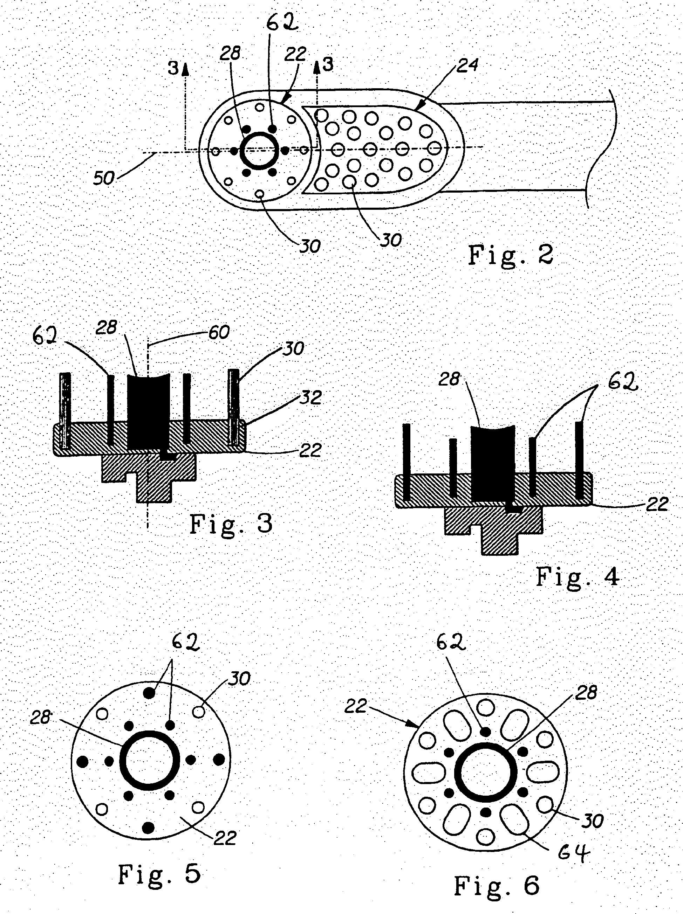

Fig. 5 is a top view of an alternate embodiment of the oscillating bristle plate of Fig. 2, wherein the outer row comprises elastomeric elements and non-elastomeric bristle tufts.
Fig. 6 is a planar top view of an alternate embodiment of the oscillating bristle plate of Fig. 2, comprising non-elastomeric elongated tufts.

### DETAILED DESCRIPTION

As shown in Fig. 1, a toothbrush 20 may comprise a head 44, a neck 46, and a handle 48. The handle 48 may comprise a motor. The head 44 may have a longitudinal axis 50 (which, as shown in Fig. 1, may be the same as a longitudinal axis of the handle 46, the head 44, and the toothbrush 20). The head 44 may have multiple bristle plates which may include moving and static bristle plates (a static bristle plate may also be referred to as a "static bristle field" and may be directly supported by the head 44 of the toothbrush 20). The head 44 may comprise an oscillating bristle plate 22, a reciprocating bristle plate 24, and a static bristle plate 26. The oscillating bristle plate 22 and/or reciprocating bristle plate 24 may oscillate or reciprocate along the longitudinal axis of the toothbrush 20, transverse to the longitudinal axis of the toothbrush 20, up and down from the toothbrush 20, or may move in another complex direction as describe in US Pat. App. Nos. 10/701,694, filed Nov. 5, 2003; 09/850,662, filed May 7, 2001; 10/036,613, filed Nov. 7, 2001; 09/993,167, filed Nov. 6 2001; 10/128,018, filed April 22, 2002; 10/208,213, filed July 30, 2002; 10/308,959, filed Dec. 3, 2002; 10/384,806, filed March 10, 2003; 10/410,038, filed April 9, 2003; and 10/825,792, filed April 16, 2004. The motion, relative to the longitudinal axis of the toothbrush 20, of a moving bristle plate should be considered its "moving motion". The motion, relative to the longitudinal axis of the toothbrush 20, which a moving or static plate was designed to be moved by the user should be considered its "brushing motion".

Also as shown in Fig. 1, the bristle plates may be arrange on the head 44 such that the oscillating bristle plate 22 is on the most distal end of the head 44, on the most proximal end of the head (that is, closest to the neck 46), or in the middle of the head 44 and flanked by other bristle plates. Additionally, gaps 52 may be formed between the bristle plates. The reciprocating bristle plate 24 may be oriented on the most distal end of the head 44, on the most proximal end of the head (that is, closest to the neck 46), or in the middle of the head 44 and flanked by other bristle plates. The static bristle plate 26 may be oriented on the most distal end of the head 44, on the most proximal end of the head (that is, closest to the neck 46), or in the middle of the head 44 and flanked by other bristle plates.

As shown in Fig. 2, the oscillating plate 22 may comprise one or more elastomeric elements 28 and 62. Multiple elastomeric elements 28 and 62 or non-elastomeric bristles 30, 64 may extend from an elastomeric base or from the bristle plate itself. For example, the elastomeric elements 62 may extend from a traditional tuft hole 32 (see Fig. 3). Additionally, the reciprocating bristle plate 24 and/or static bristle plate 26 may comprise one or more elastomeric elements 28 and 62.

The elastomeric elements 28 and 62 may also be referred to as "massaging tips/bristles/elements", "polishing tips/bristles/elements", or "whitening tips/bristles/elements", and may include fingers and prophy cups. The elastomeric elements 28 and 62 may comprise a rubber or a rubber-like composition, including, but not limited to, styrene-ethylene-butylene-styrene block copolymers, silicone rubbers (including cross-linked polymers reinforced with silica, e.g., Silastic(R) manufactured by Dow Coming Corporation), as well as those compositions described in US Patent No. 6,151,745, filed on July 12, 1999. The elastomeric elements 28 and 62 may have a shore A hardness greater than about 10, about 20, about 30, about 40, and less than about 50, about 60, about 70, and about 80.

The elastomeric elements 28 and 62 may be various shapes, including, but not limited to, cylindrical, oval, rectangular, triangular, or conical. The elastomeric elements 28 and 62 may be solid or may be completely (from end to end) or partially hollow. Hollow elastomeric elements 28 and 62 may be closed at both ends, or open at the top end (that is, the end which is not fixed to a bristle plate). The elastomeric elements 28 and 62 may be tapered or contoured. A single elastomeric element may form a wall (not shown). Examples of elastomeric walls and wall configurations are disclosed in US Pat. App. Nos. 60/439,317, filed Jan. 10, 2003; 60/463,347, filed April 15, 2003; 10/410,038, filed April 9, 2003; 10/260,585, filed Sep. 27, 2002; and 10/260,586, filed Sep. 27, 2002; and in US Pat. Nos. 6,319,332, filed June 11, 1999; 6,571,417, filed June 5, 2000; 6,446,295, filed on June 26, 2000. The elastomeric elements 28 and 62 may extend at 90 degrees relative to the bristle plates 22, 24, and 26, or may extend at an acute angle.

The elastomeric elements 62 may be less than about the diameter of a traditional non-elastomeric bristle (e.g., nylon), may be about the diameter of a traditional bristle, or may be of a substantially greater diameter, such that they are about the diameter of one or more traditional bristles, or about the diameter of one or more traditional bristle tufts. Multiple elastomeric elements 62 may be gathered, folded, and stapled in a traditional manner to form an elastomeric tuft of elements (which may also be referred to as an "elastomeric bristle tuft"), or may be intermixed with non-elastomeric bristles to form a "hybrid tuft" (which may also be referred to as a "hybrid bristle tuft"). A single hollow or solid elastomeric element may have its top portion feathered such that multiple smaller elastomeric elements are created at the top portion.

The bristle plates 22, 24, and 26 may also comprise non-elastomeric bristles 30, 64 (shown as a tuft). The elastomeric elements 28 and 62 may be less than, the same as, or greater than the height of the non-elastomeric bristles 30, 64. The elastomeric elements 28 and 62 may be of a height which is less than some of the non-elastomeric bristles 30, 64 while greater than the height of other non-elastomeric bristles 30, 64. The non-elastomeric bristles 30, 64 and the elastomeric elements 28 and 62 may be the about same height. Also, the elastomeric elements 28 and 62 may vary in height with each other, such that some are shorter or taller than others. As well, the elastomeric elements 28 and 62 may be about the same height.

As shown in Figs. 2, the oscillating bristle plate 22 may comprise one or more elastomeric elements which form one or more prophy cups 28. The prophy cup 28 may be various compositions, sizes, shapes, and orientations, as described in US Pat. App. Nos. 60/439,317, filed Jan. 10, 2003; 60/463,347, filed April 15, 2003; and US Pat. Nos. 1,255,028, filed Aug. 3, 1917; 1,268,544, filed Dec. 18, 1916; 1,588,785, filed June 30, 1924; 1,720,017, filed April 25,1928; 1,907,286, filed June 10, 1931; 1,918,521, filed Sept. 28, 1932; 1,935,099, filed Aug. 27, 1932; 1,992,770, filed May 1, 1931; 1,993,763, filed Oct. 29, 1934; 2,093,007, filed Sept. 3, 1935; 2,189,175, filed May 20, 1938; 2,202,299, filed Feb. 24, 1936; 2,789,352, filed June 27, 1955; 3,195,537, filed Sept. 25, 1962; 3,452,746, filed March 15, 1967; 3,727,313, filed Sept. 22, 1971; 3,939,599, filed, July 12, 1973; 4,424,036, filed Mar. 18, 1982; 4,432,729, filed Apr. 23, 1982; 4,929,180, filed Dec. 7, 1988; 5,131,846, filed Jan. 16, 1992; 5,360,339, filed Mar. 1, 1994; 5,584,690, filed Oct. 12, 1995; 6,146,140, filed July, 7, 1999; and International App. WO 2004/071237, filed Jan. 27, 2004 . The prophy cup 28 may be cylindrical and may be oriented coaxially with an axis of rotation 60 of the oscillating bristle plate 22. A top portion of the prophy 28 cup may be deeply or slightly concaved. However, the prophy cup 28 may have a generally flat top portion which may not hold a lot of paste, but may smear the paste against the user's teeth. The oscillating bristle plate 22 may comprise one or more elastomeric elements which form fingers 62. The fingers 62 may be various compositions, sizes, shapes, and orientations, as described in US Patent No. 6,446,295, filed on Jun. 26, 2000; and US Patent Apps. 10/214,687, filed on Aug. 8, 2002; 10/701,694, filed November 5, 2003; and International Apps. WO 02/11583, filed Aug. 6, 2001; WO 2004/014181, filed Aug. 8, 2003; and WO 2004/014183, filed Aug. 8, 2003. The fingers 62 may be oriented immediately adjacent to the prophy cup 28 such that no other bristle or object comes in- between the inner row formed by them.

As shown in Fig. 4, an embodiment may include fingers 62 oriented in the outer row (also referred to as the "periphery"), as well as the inner row, such that the fingers 62 in the outer row are taller than the fingers 62 in the inner row. Alternatively, as shown in Fig. 5, non-elastomeric bristles 30 may be placed between the fingers 62 in the outer row. From about 2 to about 100, from about 10 to about 80, from about 30 to about 60, from about 40 to about 50, from about 2 to about 8, from about 3 to about 7, from about 4 to about 6, or from about 4 to about 5 elastomeric elements 28 and 62 may be placed on a bristle plate, or together in a specific area. The elastomeric elements 28 and 62 may be spaced from about 1 to about 10, from about 2 to about 9, from about 3 to about 8, from about 4 to about 7, or from about 5 to about 6 diameters from one another. The elastomeric elements 28 and 62 may be arranged such that they do not touch one another, or so that they do touch one another at their lower portion (that is, their attached end portion), but not their top portion (that is, their free end portion), or such that they crowd each other, nearly displacing one another. The elastomeric elements 28 and 62 may be arranged in a line, which is straight or arcuate. The elastomeric elements 28 and 62 may be arranged anywhere on a moving bristle plate which is transverse to or in-line with the moving or brushing motion.

Additionally, the elastomeric elements 28 and 62 may be arranged anywhere on a static bristle plate which is transverse to or in-line with the brushing motion.

The elastomeric elements 28 and 62 may be oriented around the circumference of the oscillating bristle plate 22, or along the diameter of the oscillating bristle plate 22.

The elastomeric elements 28 and 62 may be grouped about the center 40 of the oscillating bristle plate 22, and/or in the middle row area 42 of the oscillating bristle plate 22 .

The present invention may additionally include information that will communicate to the consumer, by words and/or by pictures, that use of the invention will provide benefits associated with the elastomeric element(s). This information may include a claim of superiority over other like products. Accordingly, the use of packages in association with information that will communicate to the consumer, by words and or by pictures, that use of the invention will provide the particular and related benefits as previously mentioned above. The information may include, for example, advertising in all of the usual material, as well as statements and icons on the package, or elements of the first package, second package, packaged substance, and/or the package system, to inform the consumer.

While particular embodiments of the invention have been illustrated and described, it would be obvious to those skilled in the art that various other changes and modifications can be made without departing from the scope of the invention.

It is therefore intended to cover in the appended claims all such changes and modifications that are within the scope of this invention.

## Claims

1. An electric toothbrush (20) comprising:
a handle (48) having a motor disposed therein;
a head (44) having a longitudinal axis (50);
a neck (46) disposed between said handle (48) and said head (44);
a first bristle plate (22) which oscillates or rotates about an axis of rotation (54); said first bristle plate (22) comprises a prophy cup (28), **characterized in that** said prophy cup (28) is surrounded by at least three groups of tufts (30, 62, 64), wherein at least one group of tufts comprises non-elastomeric bristles (30, 64) and wherein at least a portion of said non-elastomeric bristles (30, 64) extend at 90 degrees or at an acute angle relative to a top surface of said first bristle plate (22) and wherein at least one group of tufts (30, 62, 64) is elongated.

2. The electric toothbrush (20) according to claim 1, wherein at least one group of tufts (30, 62, 64) comprises elastomeric fingers (62) oriented immediately adjacent to said prophy cup (28).

3. The electric toothbrush (20) according to claim 2, wherein said fingers (62) are shorter than said non-elastomeric bristles (30, 64).

4. The electric toothbrush (20) according to any of the preceding claims, wherein said electric toothbrush (20) comprises a second bristle plate (24), wherein said second bristle plate (24) reciprocates generally transverse to said longitudinal axis (50) of said head (44), wherein said second bristle plate (24) comprises at least one elastomeric element (28, 62).

5. The electric toothbrush (20) according to any of the preceding claims, wherein a top portion of said prophy cup (28) is slightly concaved.

6. The electric toothbrush (20) according to any of the preceding claims, wherein at least one group of tufts (30, 62, 64) comprises elastomeric bristle tufts (62).

7. The electric toothbrush (20) according to any of the preceding claims, wherein at least one group of tufts (30, 62, 64) comprises hybrid bristle tufts.

8. The electric toothbrush (20) according to claim 1, wherein said prophy (28) is surrounded by a first ring of tufts (62), and wherein said first ring of tufts (62) is surrounded by a second ring of tufts (30, 64), wherein said first ring (62) is shorter than said second ring of tufts (30, 64).

## Patentansprüche

1. Elektrische Zahnbürste (20), die Folgendes umfasst:
einen Griff (48) mit einem darin befindlichen Motor,
ein Kopfstück (44) mit einer Längsachse (50),
einen Hals (46), der zwischen dem Griff (48) und dem Kopfstück (44) angeordnet ist,
eine erste Borstenplatte (22), die um eine Drehachse (54) oszilliert bzw. sich um diese dreht, wobei die erste Borstenplatte (22) einen Prophylaxekelch (28) umfasst, **dadurch gekennzeichnet, dass** der Prophylaxekelch (28) von mindestens drei Borstenbüschelgruppen (30, 62, 64) umgeben ist, wobei mindestens eine Büschelgruppe nichtelastomere Borsten (30, 64) umfasst und wobei mindestens ein Abschnitt der nichtelastomeren Borsten (30, 64) in einem 90 Grad-Winkel oder in einem spitzen Winkel in Bezug auf eine Oberseite der ersten Borstenplatte (22) verläuft und wobei mindestens eine Büschelgruppe (30, 62, 64) verlängert ist.

2. Elektrische Zahnbürste (20) nach Anspruch 1, wobei die mindestens eine Büschelgruppe (30, 62, 64) elastomere Finger (62) umfasst, die unmittelbar an den Prophylaxekelch (28) angrenzend ausgerichtet sind.

3. Elektrische Zahnbürste (20) nach Anspruch 2, wobei die Finger (62) kürzer als die nichtelastomeren Borsten (30, 64) sind.

4. Elektrische Zahnbürste (20) nach einem der vorstehenden Ansprüche, wobei die elektrische Zahnbürste (20) eine zweite Borstenplatte (24) umfasst, wobei sich die zweite Borstenplatte (24) im Allgemeinen quer zur Längsachse (50) des Kopfstücks (44) hin- und herbewegt, wobei die zweite Borstenplatte (24) mindestens ein elastomeres Element (28, 62) umfasst.

5. Elektrische Zahnbürste (20) nach einem der vorstehenden Ansprüche, wobei ein oberer Abschnitt des Prophylaxekelches (28) leicht konkav ist.

6. Elektrische Zahnbürste (20) nach einem der vorstehenden Ansprüche, wobei mindestens eine Büschelgruppe (30, 62, 64) elastomere Borstenbüschel (62) umfasst.

7. Elektrische Zahnbürste (20) nach einem der vorstehenden Ansprüche, wobei mindestens eine Büschelgruppe (30, 62, 64) hybride Borstenbüschel umfasst.

8. Elektrische Zahnbürste (20) nach Anspruch 1, wobei der Prophylaxekelch (28) von einem ersten Büschelring (62) umgeben ist und wobei der erste Büschelring (62) von einem zweiten Büschelring (30, 64) umgeben ist, wobei der erste Ring (62) kürzer ist als der zweite Büschelring (30, 64).

## Revendications

1. Brosse à dents électrique (20) comprenant :
un manche (48) présentant un moteur disposé à l'intérieur ;
une tête (44) présentant un axe longitudinal (50) ;
un col (46) disposé entre ledit manche (48) et ladite tête (44);
une première plaque de poils (22) qui oscille ou tourne autour d'un axe de rotation (54) ; ladite première plaque de poils (22) comprenant une cupule de polissage (28), **caractérisée en ce que** ladite cupule de polissage (28) est entourée par au moins trois groupes de touffes (30, 62, 64), au moins un groupe de touffes comprenant des poils non élastomériques (30, 64) et au moins une partie desdits poils non élastomériques (30, 64) s'étendant à 90 degrés ou à un angle aigu par rapport à une surface supérieure de ladite première plaque de poils (22), et au moins un groupe de touffes (30, 62, 64) étant allongé.

2. Brosse à dents électrique (20) selon la revendication 1, dans laquelle au moins un groupe de touffes (30, 62, 64) comprend des doigts élastomériques (62) orientés immédiatement à proximité de ladite cupule de polissage (28).

3. Brosse à dents électrique (20) selon la revendication 2, dans laquelle lesdits doigts (62) sont plus courts que lesdits poils non élastomériques (30, 64).

4. Brosse à dents électrique (20) selon l'une des revendications précédentes, dans laquelle ladite brosse à dents électrique (20) comprend une seconde plaque de poils (24), ladite seconde plaque de poils (24) effectuant un mouvement alternatif généralement transversal à l'axe longitudinal (50) de ladite tête (44), ladite seconde plaque de poils (24) comprenant au moins un élément élastomérique (28, 62).

5. Brosse à dents électrique (20) selon l'une des revendications précédentes, dans laquelle une partie supérieure de ladite cupule de polissage (28) est légèrement concave.

6. Brosse à dents électrique (20) selon l'une des revendications précédentes, dans laquelle au moins un groupe de touffes (30, 62, 64) comprend des touffes de poils élastomériques (62).

7. Brosse à dents électrique (20) selon l'une des revendications précédentes, dans laquelle au moins un groupe de touffes (30, 62, 64) comprend des touffes de poils hybrides.

8. Brosse à dents électrique (20) selon la revendication 1, dans laquelle ladite cupule (28) est entourée par un premier cercle de touffes (62) et ledit premier cercle de touffes (62) est entouré par un second cercle de touffes (30, 64), ledit premier cercle (62) étant plus court que ledit second cercle de touffes (30, 64).
